# EUROPEAN PATENT APPLICATION

(11) **EP 4 545 476 A1**
(43) Date of publication of application: **30.04.2025**
(21) Application number: 23205624.2
(22) Date of filing: 24.10.2023
(51) Int. Cl.: C01B 3/04, B01J 8/02

(54) **FUEL CRACKER FOR PRODUCING A FUEL WITH STABLE COMBUSTION PROPERTIES FROM AMMONIA**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Lutz, Michael, 60439 Frankfurt am Main (DE); Shrivastava, Swatantra Kumar, 60439 Frankfurt am Main (DE); Vicari, Lorenzo, 60439 Frankfurt am Main (DE); Ulber, Dieter, 60439 Frankfurt am Main (DE)
(74) Representative: Air Liquide

(57) **Abstract**

Process (2) for the production of an enhanced fuel gas (4) containing at least hydrogen gas from a fuel stream, in particular from an ammonia fuel stream (6). Said process comprises the following steps:
- providing the fuel stream (6) (S100);
- providing a condensable medium (8), preferably water steam (8), to a cracker unit (10);
- at least one step of performing an endothermic cracking reaction of the fuel stream (6) in the cracker unit comprising at least one catalyst suitable for cracking said fuel
stream (6), so as to produce an at least partially cracked fuel stream as said enhanced fuel gas (4) (S300); and
- condensing at least partially said condensable medium (8) to provide said heat for the endothermic cracking reaction of the fuel stream (6).

## Description

The present invention relates to a process for the production of an enhanced fuel gas containing at least hydrogen gas from a fuel stream. The invention also relates to an apparatus configured to perform such a process. The invention also relates to a use of the enhanced fuel gas produced by such a process.

Hydrogen is renowned for its lightweight nature and optimal combustion properties as a fuel and its environment-friendliness during its combustion, i.e., no emission of any carbon dioxide (CO2), particulate or sulfur. This makes hydrogen a vector for the energy transition.

However, transporting pure hydrogen gas is a complex challenge for safety reasons. To this end, ammonia (NH3), containing three atoms of hydrogen and facilitating the transport of hydrogen, is a good alternative as a fuel to pure hydrogen gas (H2).

Nevertheless, ammonia has poor combustion properties, such as small explosion limits window, high ignition temperature, and slow kinetics.

For example, for combustion applications of ammonia in industrial furnaces, increasing the ammonia concentration in a fuel leads to instability of the flame during the fuel combustion. Currently, pure ammonia combustion is impossible to achieve under industrial conditions. In addition, the combustion of ammonia produces nitrogen oxide (NOx).

As a consequence, there is a need to counterbalance these issues, and in particular to produce a fuel which has improved combustion properties and to emit less nitrogen oxide from said fuel combustion.

For this purpose, the invention relates to a process for the production of an enhanced fuel gas containing at least hydrogen gas from a fuel stream, in particular from an ammonia fuel stream, said process comprising the following steps:
- providing the fuel stream;
- providing a condensable medium, preferably water steam, to a cracker unit;
- at least one step of performing an endothermic cracking reaction of the fuel stream in the cracker unit comprising at least one catalyst suitable for cracking said fuel stream, so as to produce an at least partially cracked fuel stream as said enhanced fuel gas; and
- condensing at least partially said condensable medium to provide said heat for the endothermic cracking reaction of the fuel stream.

The use of the condensable medium, such as water steam, to provide the heat for the endothermic cracking reaction allows for, in a non-exhaustive way, the following advantages.

During the condensation of condensable medium from vapor to liquid, a latent heat is released to the cracker unit as well as possibly sensible heat. This heat assists the cracker unit in overcoming a required activation energy of the catalyst to at least partially crack the fuel stream into the enhanced fuel gas.

As a result, the fuel stream does not need to be heated at high temperatures in the cracker unit compared with the operating temperatures of a classic ammonia cracking reactor or of a classic ammonia cracker. This avoids the use of costly materials to build said cracker unit.

In addition, the use of a condensable medium enables a more homogeneous temperature distribution within the cracker unit. Therefore, the whole cracker unit exhibits similar reaction rates and the catalyst can be optimized to that temperature.

Furthermore, a condensable medium can be chosen among a variety of condensable media in order to provide a necessary heat for the endothermic reaction. In addition, at a given condensable medium, the temperature at which the cracking reaction takes place can be precisely adjusted with the pressure of the condensable medium.

Since the condensable medium enables the at least partial cracking of the fuel stream, the use of the condensable medium allows to limit the size and/or the amount of catalyst required in said cracker unit. Therefore, the compactness of the cracker unit can be improved.

Furthermore, said enhanced fuel gas obtained after the endothermic cracking reaction allows to provide a stable flame during its combustion. In particular, hydrogen gas in the enhanced fuel gas allows to enhance and to stabilize the combustion properties of the enhanced fuel gas.

This allows to optimize the combustion properties of the enhanced fuel gas, while reducing nitrogen oxides formation during the combustion of said enhanced fuel gas.

Therefore, a downstream gas purification of the flue gas generated by the combustion of the enhanced fuel gas can be smaller in size. This represents an eco-friendly and cost-effective solution.

Moreover, the condensable medium can be produced in the same industrial zone as the zone in which the cracking reaction occurs and the logistics of said condensable medium can be simplified.

Additionally, it should be pointed out that the invention allows to circumvent a complex integration of the cracker unit in a flue gas duct or a complex integration of the cracker unit with a process gas, such as a synthesis gas from an endothermal process. Instead, the use of a condensable medium as a heat transfer medium allows a safe, simple and compact design. This allows to decouple the process during which the condensing medium is vaporized and the process of producing the enhanced fuel gas during which the condensable medium is partially condensed.

In a nutshell, the invention allows to produce an enhanced fuel gas from a fuel stream which has improved combustion properties and to emit less nitrogen oxides from said enhanced fuel gas combustion, while improving the cost-effectiveness and the compactness of the cracker unit.

By the "condensable medium" is meant a substance, for example, water steam, or a vapor, from which a heat, in particular a latent heat as well as possibly a sensible heat, is released for the endothermic reaction of the fuel stream during the phase change of the condensable medium, in particular during the condensation of the condensable medium.

Said condensable medium becomes a "condensed medium" when the condensable medium has at least partially undergone the phase change, in particular during the condensation of the condensable medium, so as to provide the heat for the endothermic reaction of the fuel stream. That is to say, a partially transformed "condensable medium", for example condensed steam, wherein gas (vapor) and liquid coexist, will be hereafter qualified as a "condensed medium".

The term "enhanced fuel gas" is used to denote the gas product produced by the endothermic cracking reaction of the fuel stream, in particular ammonia fuel stream. The enhanced fuel gas advantageously comprises hydrogen gas, nitrogen gas and potentially some uncracked fuel stream, in particular uncracked ammonia fuel .

The invention may comprise at least one of the following features, taken independently or in combination.

According to one aspect of the invention, the enhanced fuel gas comprises hydrogen gas, and potentially uncracked fuel.

According to one aspect of the invention, the enhanced fuel gas advantageously comprises hydrogen gas, nitrogen gas and optionally some uncracked fuel, in particular uncracked ammonia fuel .

According to one aspect of the invention, the process comprises condensing at least partially the condensable medium to provide said heat for the endothermic reaction of the fuel stream simultaneously as performing said endothermic cracking reaction of the fuel stream in the cracker unit.

According to one aspect of the invention, the process further comprises controlling the pressure of the condensable medium so as to regulate an amount of said heat supplied to the endothermic cracking reaction.

Thus, controlling the pressure of condensable medium allows to finely adjust the temperature level within the cracker unit. Therefore, the conversion rate of endothermic cracking reaction, as well as a predetermined ratio of uncracked ammonia, hydrogen gas and nitrogen gas can be precisely adjusted. This way, it is possible - on the one hand - to have an energy efficient process (waste heat integration) and - on the other hand - to ensure lower NOx formation and stable combustion.

According to one aspect of the invention, the condensable medium is water steam.

According to one aspect of the invention, the condensable medium is partially condensed to become a partially condensed medium after providing said heat for said endothermic reaction.

In other words, a part of the condensable medium remains as less dense state, for example at a vapor state, a gas state or water steam state in comparison with liquid or liquid water state.

According to one aspect of the invention, the provided condensable medium is at a superheated or saturated state.

Thus, at the superheated or saturated state, said condensable medium allows to provide sensible and latent heat.

According to one aspect of the invention, the process further comprises a desuperheating step so as to provide a condensable medium at a saturated state for cracking said fuel stream.

According to one aspect of the invention, the condensed medium, for example condensed steam, comprises a liquid fraction between 70 and 100 % .

According to one aspect of the invention, the pressure of the fuel stream, in particular the ammonia fuel stream, is comprised between 1 and 10 barg, preferably comprised between 2 and 8 barg, more preferably comprised between 3 and 5 barg during said endothermic cracking reaction.

According to one aspect of the invention, the condensable medium pressure is comprised between 35 and 115 barg during said at least partial condensation of said condensable medium.

According to one aspect of the invention, the ammonia molar fraction in the enhanced fuel gas is comprised between 0 and 80%, preferably comprised between 0 and 50%.

According to one aspect of the invention, the hydrogen molar fraction in the enhanced fuel gas is comprised between 10 and 50%, preferably comprised between 15 and 30%.

According to one aspect of the invention, the conversion rate of the endothermic cracking reaction is higher than 10% , preferably higher than 50%.

Alternatively or in combination, the conversion rate of the endothermic cracking reaction is up to 20%, preferably up to 50%.

Thus, a part of the fuel stream can be transformed into the enhanced fuel gas comprising hydrogen.

As an alternative, the fuel stream can comprise a methanol fuel stream.

The resulting enhanced fuel gas may comprise uncracked methanol fuel stream and hydrogen gas.

In one embodiment, the process further comprises a pre-heating step comprising pre-heating the provided fuel stream before performing the endothermic cracking reaction of the fuel stream in the cracker unit.

Advantageously, the fuel stream is preheated at a temperature range comprised between 200 and 350 °C, preferably comprised between 250 and 300 °C.

In one form of the invention, the process further comprises a vaporizing step comprising vaporizing the provided fuel stream prior to the step of performing the endothermic cracking reaction of the fuel stream in the cracker unit.

In one embodiment, the vaporizing step is prior to the pre-heating step.

In one embodiment, the pre-heating step can be powered by a hot gas stream or by a water steam.

In one embodiment, the vaporizing step can be powered by a hot gas stream or by a water steam.

According to one aspect of the invention, the process comprises at least two successive steps of performing an endothermic cracking reaction of the enhanced fuel gas so as to produce said enhanced fuel gas.

Thus, a pre-enhanced fuel gas from a first step of performing an endothermic cracking reaction can be fed to the second cracker unit, in order to produce the enhanced fuel gas comprising a higher content of hydrogen gas.

According to one aspect of the invention, the temperature of the condensable medium is comprised between 100 and 515 °C, preferably between 20 0 and 45 0°C, more preferably between 250 and 33 0 °C during said endothermic cracking reaction.

According to one aspect of the invention, a hydrogen gas content in the enhanced fuel gas is comprised between 20 and 45 mol %, preferably comprised between 20 and 30 mol %, more preferably comprised between 25 and 30 mol %.

According to one aspect of the invention, an ammonia content in the enhanced fuel gas is comprised between 0 and 25 mol %, preferably comprised between 15 and 20 mol %.

According to one aspect of the invention, the cracker unit comprises a catalyst bed comprising said catalyst.

According to one aspect of the invention, the catalyst is suitable for cracking said fuel stream at a temperature comprised between 20 0 and 4 00 °C, preferably between 250 and 32 0 °C.

The invention also relates to an apparatus configured to perform a process of the invention, said apparatus comprising:
- at least one cracker unit configured to perform an endothermic cracking reaction of a fuel stream so as to produce an at least partially cracked fuel stream as an enhanced fuel gas, said cracker unit comprising:
   ∘ a catalyst bed suitable for cracking said fuel stream; and
   ∘ a condensable medium circulation section arranged in thermal contact with the catalyst bed so as to provide heat from a condensable medium, preferably water steam, to said endothermic cracking reaction, thereby at least partially condensing said condensable medium.

The term "catalyst bed" refers to a layer formed by at least one catalyst. It is typically a packed or structured arrangement of solid catalytic particles or a catalyst-coated surface through which reactant gases or liquids, such as the fuel stream, flow, thereby enabling chemical reactions, for example an endothermic cracking reaction, to occur.

The invention may comprise at least one of the following features, taken independently or in combination.

According to one aspect of the invention, the condensable medium circulation section is configured to condense at least partially the condensable medium, preferably water steam, to provide said heat for the endothermic cracking reaction of the fuel stream.

According to one aspect of the invention, the cracker unit comprises a heat exchanger, in particular a shell-and-tube heat exchanger, said heat exchanger comprising a bundle of circulation channels. In particular, said circulation channels have the shape of tubes, in particular straight or bent tubes, or coils, comprising said at least one catalyst bed. Said bundle comprises a plurality of circulation channels.

Said bundle is configured to increase a heat exchange with the condensable medium, in particular water steam.

According to one aspect of the invention, the condensable medium circulation section comprises:
- a shell, in particular a metallic shell, through which said bundle is extending.

According to one aspect of the invention, the cracker unit comprises a gas inlet configured to receive said fuel stream.

According to one aspect of the invention, the cracker unit comprises a gas outlet configured to discharge said enhanced fuel gas from the cracker unit.

According to one aspect of the invention, the cracker unit comprises an inlet manifold arranged in fluid communication with said gas inlet and with the bundle for distributing the fuel stream among said circulation channels of said bundle.

According to one aspect of the invention, the cracker unit comprises an outlet manifold arranged in fluid communication with said gas outlet and with the bundle for collecting the at least partially cracked fuel stream from said circulation channels of said bundle. In particular, the bundle is extending between the inlet manifold and the outlet manifold.

According to one aspect of the invention, the apparatus comprises:
a boiler connected with the condensable medium circulation section.

According to one aspect of the invention, the apparatus comprises:
- at least one steam conduit configured to supply steam from said boiler to the condensable medium circulation section.

According to one aspect of the invention, the apparatus comprises:
- at least one liquid conduit connected to the condensable medium circulation section to collect the at least partially condensed steam, in particular at least partially condensed water steam, from the condensable medium circulation section, and connected to the boiler so as to recycle said at least partially condensed medium as a boiler liquid feed, in particular heated water, in the boiler.

According to one aspect of the invention, the apparatus comprises a desuperheater upstream of the fuel cracker to so as to provide the condensable medium at a saturated state for cracking said fuel stream.

According to one aspect of the invention, the boiler comprises a heating device configured to provide the heat to boiler liquid, in particular to water, so as to supply condensable medium, in particular water steam from said boiler. Said heating device can comprise at least one electrical heating element, for example based on Joule effect, at least one radiation heating element and/or at least one convective heating element.

According to one aspect of the invention, the apparatus comprises:
- a pressure controller configured to control the pressure of steam, for example in a steam drum of the boiler, so as to regulate an amount of said heat supplied to the endothermic cracking reaction.

Thus, controlling the pressure of steam in the boiler allows to finely adjust the temperature level within the cracker unit. Therefore, the conversion rate of endothermic cracking reaction, as well as a predetermined ratio of uncracked ammonia, hydrogen gas and nitrogen gas can be precisely adjusted with said pressure controller.

In one embodiment, the boiler comprises an inlet for a liquid feed, for example boiling water feed.

In one embodiment, the boiler comprises an outlet for saturated condensed medium, for example for saturated condensed steam.

In one embodiment, the boiler comprises a safety reducing valve in order to release excess steam pressure in the boiler.

In one embodiment, the apparatus further comprises an inlet for a start-up steam.

The term "start-up steam" refers to the steam used during the initial stages of said apparatus operation to heat up and pressurize said apparatus before achieving full power operation.

In one embodiment, the catalyst bed comprises ruthenium, nickel, aluminum and the oxides thereof, or a combination thereof.

In one embodiment, the catalyst bed comprises nickel as catalytically active material, in particular as a catalytically active material on a carrier, for example an aluminum oxide (Al2O3) carrier.

In one embodiment, the catalyst bed comprises from 20 to 50 wt% of nickel, preferably comprises from 2 5 to 45 wt% of nickel, preferably comprises from 30 to 45 wt% of nickel.

In one embodiment, the catalyst bed comprises rare transition metal belonging to the platinum group, such as ruthenium as catalytically active material, preferably above 1.5 wt % of ruthenium.

In one embodiment, the cracker unit comprises a catalyst support layer and the catalyst bed is lying on said catalyst support layer. Said catalyst support layer may comprise, for example, a packed bed of inert particles supporting said catalyst bed. In particular, said packed bed of inert particles is arranged in said outlet manifold.

By "inert particles" is meant as particles not inducing any catalytic activity for endothermal cracking reaction.

In one embodiment, the apparatus further comprises a catalyst discharge configured to evacuate the catalyst of the catalyst bed.

The invention also relates to a plant comprising a fired equipment and the apparatus as previously described, wherein said apparatus is connected to the fired equipment to provide said enhanced fuel gas to said fired equipment, said fired equipment being configured for the combustion of the enhanced fuel gas. Said fired equipment may be configured for performing a fired industrial process, for example in the fields of glasswork, oil refining, and metallurgy. Said fired equipment may be a turbine, for example in a gas turbine. Said fired equipment may be configured to perform an endothermic reaction, such as a hydrocarbon reforming reaction or an ammonia splitting reaction. In particular, said fired equipment comprises a furnace configured for the combustion of the enhanced fuel to provide heat to said endothermic reaction.

The invention also relates to a use of the enhanced fuel gas for the startup of a plant comprising a fired equipment, said fired equipment being, for example configured to perform an endothermic reaction, providing said enhanced fuel gas to the fired equipment during the startup of said plant.

The invention also relates to a use of the enhanced fuel gas produced by a process of the invention for a combustion.

In one embodiment, a combustion of the enhanced fuel gas can take place in a turbine, for example in a gas turbine, for example for generating electrical power. Said electrical power may be used to provide additional heat to the endothermic cracking reaction of the fuel stream. Additional heat may also be provided by said pre-heating step of the fuel stream.

Alternatively, the combustion of the enhanced fuel gas can take place for a fired industrial process, for example in the fields of glasswork, oil refining, chemical processing and metallurgy.

Alternatively, the combustion of the enhanced fuel gas can take place to provide heat to an endothermic reaction, such as a hydrocarbon reforming reaction or an ammonia splitting reaction.

The invention also relates to the use of the apparatus as previously described for the production of an enhanced fuel gas containing at least hydrogen gas from a fuel stream, in particular from an ammonia fuel stream.

In one embodiment, the produced enhanced fuel is combusted, for example in a turbine, for example in a gas turbine, for example for generating electrical power, or in a fired industrial process, for example in the fields of glasswork, oil refining, chemical processing and metallurgy. In particular, the enhanced fuel is combusted to provide heat to an endothermic reaction, such as a hydrocarbon reforming reaction or an ammonia splitting reaction.

In what has been described above, "steam" or "water steam" can be understood as being equivalent and "steam" is used as for the sake of simplicity.

Note that all of the features and configurations described above are purely examples. Other features, details and advantages of the invention will become clearer on reading the detailed description set out below, together with several embodiments provided purely as examples and by way of indication, with reference to the attached schematic drawing, in which:
Fig. 1 schematically shows a process of the invention and a use of the enhanced fuel gas produced by said process for a combustion, as an illustrative and non-limiting example.
Fig. 2 schematically shows an apparatus of the invention as an illustrative and non-limiting example.

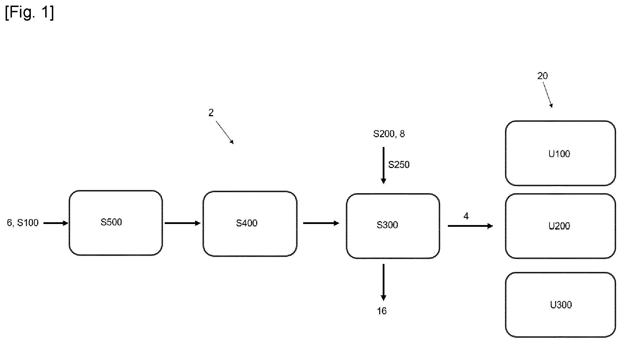

Referring to figure 1, an example of a process 2 for the production of an enhanced fuel gas 4 containing hydrogen gas from an ammonia fuel stream 6 is represented.

Said process 2 comprises the following steps:
- providing the ammonia fuel stream 6 (S100);
- providing a condensable medium 8, water steam 8 to a cracker unit 10 (S200);
- a step of performing an endothermic cracking reaction of the ammonia fuel stream 6 in the cracker unit 10 comprising a catalyst 12 suitable for cracking said ammonia fuel stream 6, so as to produce an at least partially cracked fuel stream as said enhanced fuel gas 4 (S300); and
- condensing at least partially water steam 8 to provide said heat for the endothermic reaction of the ammonia fuel stream 6 simultaneously as performing said endothermic cracking reaction of the ammonia fuel stream 6 in the cracker unit 10. (S250).

By the "condensable medium 8" is meant a substance, for example, water steam 8, or a vapor, from which a heat, in particular a latent heat as well as possibly a sensible heat, is released for the endothermic reaction of the ammonia fuel stream during the phase change of the condensable medium 8, in particular during the condensation of the condensable medium 8.

Said condensable medium 8 becomes a "condensed medium 16" when at least partially condensable medium 8 has undergone the phase change, in particular during the condensation of the condensable medium 8, so as to provide the heat for the endothermic reaction of the ammonia fuel stream. That is to say, a partially transformed "condensable medium 8", for example condensed steam 16, wherein gas (vapor) and liquid coexist, will be hereafter qualified as a "condensed medium 16".

The enhanced fuel gas 4 advantageously comprises hydrogen gas, nitrogen gas and uncracked ammonia fuel .

The molar ratio of nitrogen to hydrogen of the enhanced fuel gas 4 is 1:3.

The process 2 further comprises controlling the pressure of water steam 8 so as to regulate an amount of said heat supplied to the endothermic cracking reaction.

Thus, controlling the pressure of the water steam 8 allows to finely adjust the temperature level within the cracker unit 10. Therefore, the conversion rate of endothermic cracking reaction, as well as a predetermined ratio of uncracked ammonia, hydrogen gas and nitrogen gas can be precisely adjusted. This way, it is possible - on the one hand - to have an energy efficient process (waste heat integration) and - on the other hand - to ensure lower NOx formation and stable combustion.

The condensed steam 16 comprises a liquid fraction between 70 and 100 %.

The pressure of the ammonia fuel stream 6, is comprised between 1 and 10 barg, preferably comprised between 2 and 8 barg, more preferably comprised between 3 and 5 barg during said endothermic cracking reaction.

The water steam pressure is comprised between 35 and 115 barg during said endothermic cracking reaction.

The ammonia molar fraction in the enhanced fuel gas 4 is comprised between 0 and 80%, preferably comprised between 0 and 50%.

The hydrogen molar fraction in the enhanced fuel gas 4 is comprised between 10 and 50%, preferably comprised between 15 and 30%.

The conversion rate of the endothermic cracking reaction is higher than 10%, preferably higher than 50%.

Alternatively or in combination, the conversion rate of the endothermic cracking reaction is up to 20%, preferably up to 50%.

Thus, a part of the ammonia fuel stream 6 can be transformed into the enhanced fuel gas 4 comprising hydrogen. For example, the enhanced fuel gas 4 may still comprise a part of the ammonia fuel stream 6.

The process further comprises a pre-heating step comprising pre-heating the provided fuel stream 6 before performing (S300) the endothermic cracking reaction of the fuel stream in the cracker unit 10 (S400).

The ammonia fuel stream 6 is preheated at a temperature range comprised between 200 and 350 °C, preferably comprised between 250 and 300 °C.

The process 2 further comprises a vaporizing step (S500) comprising vaporizing the provided ammonia fuel stream 6 prior to the step of performing (S300) the endothermic cracking reaction of the ammonia fuel stream 6 in the cracker unit 10.

The vaporizing step (S500) is prior to the pre-heating step (S400).

The pre-heating step (S400) can be powered by a hot gas stream or by a water steam.

The vaporizing step (S500) can be powered by a hot gas stream or by a water steam.

The temperature of the water steam temperature is comprised between 100 and 515°C, preferably between 200 and 450°C, more preferably between 250 and 330 °C during said endothermic cracking reaction.

A hydrogen gas content in the enhanced fuel gas 4 is comprised between 20 and 45 mol %, preferably comprised between 20 and 30 mol %, more preferably comprised between 25 and 30 mol %.

An ammonia content in the enhanced fuel gas 4 is comprised between 0 and 25 mol %, preferably comprised between 15 and 20 mol %.

The catalyst 12 is suitable for cracking said ammonia fuel stream 6 at a temperature comprised between 200 and 400 °C, preferably between 250 and 320 °C.

Referring again to figure 1, an example of the use 20 of the enhanced fuel gas 4 produced by a process of the invention 2 for a combustion is represented.

A combustion of the enhanced fuel gas 4 can take place in a gas turbine for generating electrical power (U100). Said electrical power may be used to provide additional heat to the endothermic cracking reaction of the ammonia fuel stream 6. Additional heat may also be provided by said pre-heating step (S400) of the ammonia fuel stream 6.

The combustion of the enhanced fuel gas 4 can take place for a fired industrial process (U200), for example in the fields of glasswork, oil refining, chemical processing and metallurgy.

The combustion of the enhanced fuel gas 4 can take place to provide heat to an endothermic reaction (U300), such as a hydrocarbon reforming reaction or an ammonia splitting reaction.

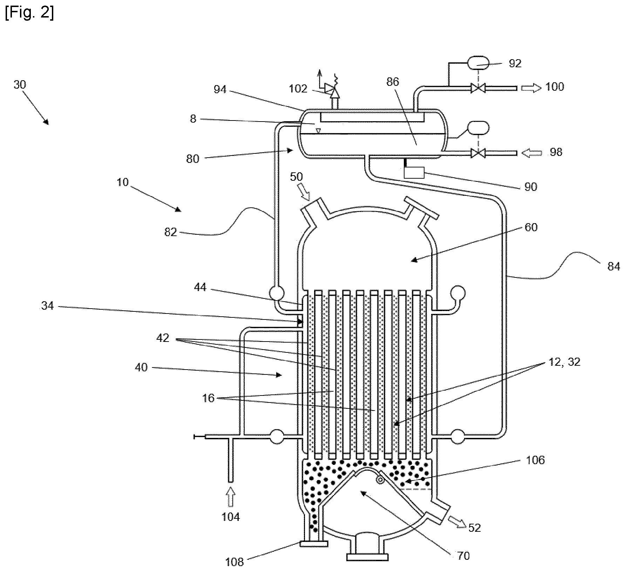

Referring to figure 2, an example of an apparatus 200 configured to perform a process of the invention is represented.

Said apparatus 30 comprises:
- a cracker unit 10 configured to perform an endothermic cracking reaction of the ammonia fuel stream 6 so as to produce an at least partially cracked ammonia fuel stream as an enhanced fuel gas 4, said cracker unit comprising:
   ∘ a catalyst bed 32 suitable for cracking said ammonia fuel stream 6; and
   ∘ a condensable medium circulation section 34 arranged in thermal contact with the catalyst bed 32 so as to provide heat from water steam 8, thereby at least partially condensing said water steam, to said endothermic cracking reaction.

The term "catalyst bed 32" refers to a layer formed by one catalyst 12. It is typically a packed or structured arrangement of solid catalytic particles or a catalyst-coated surface through which reactant gases or liquids, such as the ammonia fuel stream 6, flow, thereby enabling an endothermic cracking reaction, to occur.

The condensable medium circulation section 34 is configured to condense at least partially water steam 8, to provide said heat for the endothermic cracking reaction of the ammonia fuel stream 6.

The cracker unit 10 comprises a shell-and-tube heat exchanger 40, said heat exchanger comprising a bundle of circulation channels 42, said channels having the shape of tubes, in particular straight or bent tubes, or coils, comprising said at least one catalyst bed 32.

Said circulation channels 42 are spaced with a regular gap parallelly to each other.

Said bundle is configured to increase a heat exchange with water steam 8.

The condensable medium circulation section 34 comprises:
- a metallic shell 44, through which said bundle is extending.

The cracker unit 10 comprises a gas inlet 50 configured to receive said ammonia fuel stream 6.

The cracker unit 10 comprises a gas outlet 52 configured to discharge said enhanced fuel gas 4 from the cracker unit 10.

The cracker unit 10 comprises an inlet manifold 60 arranged in fluid communication with said gas inlet 50 and with the bundle for distributing the fuel stream among said circulation channels 34 of said bundle.

The cracker unit 10 comprises an outlet manifold 70 arranged in fluid communication with said gas outlet 52 and with the bundle for collecting the at least partially cracked ammonia fuel stream from said circulation channels 42 of said bundle. In particular, the bundle is extending between the inlet manifold 60 and the outlet manifold 70.

The apparatus 30 comprises a water steam reactor, said apparatus 30 further comprising:
a boiler 80 connected with the condensable medium circulation section 34.

The boiler 80 comprises:
- one steam conduit 82 configured to supply water steam from said boiler to the condensable medium circulation section 34.

The boiler 80 comprises:
- one liquid conduit 84 connected to the condensable medium circulation section to collect the at least partially condensed water steam 16, from the condensable medium circulation section 34, and connected to the boiler so as to recycle said at least partially condensed water steam 16 as a boiler liquid feed, heated water 86, in the boiler 80.

The boiler 80 comprises a heating device 90 configured to provide the heat to the water 86, so as to supply water steam 8 from said boiler 80.

The boiler 80 comprises a downstream valve (not represented) so as to reduce the pressure of condensable medium 8, in particular condensable steam, water steam 8.

Said heating device 90 can comprise at least one electrical heating element, for example based on Joule effect, at least one radiation heating element and/or at least one convective heating element.

The boiler 80 comprises:
- a pressure controller 92 configured to control the pressure of water steam in a steam drum 94 of the boiler 80 so as to regulate an amount of said heat supplied to the endothermic cracking reaction.

Thus, controlling the pressure of water steam 8 in the boiler 80 allows to finely adjust the temperature level within the cracker unit 10. Therefore, the conversion rate of endothermic cracking reaction, as well as a predetermined ratio of uncracked ammonia, hydrogen gas and nitrogen gas can be precisely adjusted with said pressure controller 92.

The boiler 80 comprises an inlet for boiling water feed 98.

The boiler 80 comprises an outlet for saturated condensed steam 100.

The boiler 80 comprises a safety reducing valve 102 in order to release excess steam pressure in the boiler 80.

The apparatus 30 further comprises an inlet for a start-up steam 104.

The term "start-up steam 104" refers to the steam used during the initial stages of said apparatus operation to heat up and pressurize said apparatus 30 before achieving full power operation.

The catalyst bed 32 comprises ruthenium, nickel, aluminum and the oxides thereof, or a combination thereof.

The catalyst bed 32 comprises nickel as catalytically active material, in particular as a catalytically active material on a carrier, for example an aluminum oxide (AI2O3) carrier.

The catalyst bed 32 comprises from 20 to 50 wt% of nickel, preferably comprises from 25 to 45 wt% of nickel, preferably comprises from 30 to 45 wt% of nickel.

The catalyst bed 32 comprises rare transition metal belonging to the platinum group, such as ruthenium as catalytically active material, preferably above 1.5 wt % of ruthenium.

The cracker unit 10 comprises a catalyst support layer 106 and the catalyst bed 32 is lying on said catalyst support layer 106. Said catalyst support layer 106 may comprise, for example, a packed bed of inert particles supporting said catalyst bed 32. In particular, said packed bed of inert particles is arranged in said outlet manifold.

By "inert particles" is meant as particles not inducing any catalytic activity for endothermal cracking reaction.

The apparatus 30 further comprises a catalyst discharge 108 configured to evacuate the catalyst 12 of the catalyst bed 32.

In what has been described above, "steam" or "water steam 8" can be understood as being equivalent and "steam" is used as for the sake of simplicity.

## Claims

1. Process (2) for the production of an enhanced fuel gas (4) containing at least hydrogen gas from a fuel stream, in particular from an ammonia fuel stream (6), said process comprising the following steps:
- providing the fuel stream (6) (S100);
- providing a condensable medium (8), preferably water steam (8), to a cracker unit (10);
- at least one step of performing an endothermic cracking reaction of the fuel stream (6) in the cracker unit (10) comprising at least one catalyst (12) suitable for cracking said fuel stream (6), so as to produce an at least partially cracked fuel stream as said enhanced fuel gas (4) (S300); and
- condensing at least partially said condensable medium (8) to provide said heat for the endothermic cracking reaction of the fuel stream (6).

2. Process (2) according to claim 1, wherein the condensable medium (8) is water steam (8).

3. Process (2) according to claim 1 or 2, further comprising controlling the pressure of the condensable medium (8) so as to regulate an amount of said heat supplied to the endothermic cracking reaction.

4. Process (2) according to any one of the preceding claims, wherein the pressure of the fuel stream (6), in particular the ammonia fuel stream (6), is comprised between 1 and 10 barg, preferably comprised between 2 and 8 barg, more preferably comprised between 3 and 5 barg during said endothermic cracking reaction.

5. Process (2) according to any one of the preceding claims, further comprising at least two successive steps of performing an endothermic cracking reaction of the enhanced fuel gas so as to produce said enhanced fuel gas.

6. An apparatus (30) configured to perform a process (2) according to claims 1 to 5, said apparatus (30) comprising:
- at least one cracker unit (10) configured to perform an endothermic cracking reaction of a fuel stream (6) so as to produce an at least partially cracked fuel stream as an enhanced fuel gas (4), said cracker unit (10) comprising:
o a catalyst bed (32) suitable for cracking said fuel stream (6); and
o a condensable medium circulation section (34) arranged in thermal contact with the catalyst bed (32) so as to provide heat from a condensable medium (8), preferably water steam, to said endothermic cracking reaction, thereby at least partially condensing said condensable medium.

7. Apparatus (30) according to claim 6, wherein the cracker unit comprises a heat exchanger, in particular a shell-and-tube heat exchanger (40), said heat exchanger comprising a bundle of circulation channels (42).

8. Apparatus (30) according to claim 7, wherein the condensable medium circulation section (34) comprises:
- a shell, in particular a metallic shell (44), through which said bundle is extending.

9. Apparatus (30) according to claims 7 or 8, wherein the cracker unit (10) comprises:
- a gas inlet (50) configured to receive said fuel stream (6);
- a gas outlet (52) configured to discharge said enhanced fuel gas (4) from the cracker unit (10);
- an inlet manifold (60) arranged in fluid communication with said gas inlet (50) and with the bundle for distributing the fuel stream among said circulation channels (34) of said bundle; and
- an outlet manifold (70) arranged in fluid communication with said gas outlet (52) and with the bundle for collecting the at least partially cracked fuel stream from said circulation channels of said bundle.

10. Apparatus (30) according to claims 6 to 9, comprising:
- a boiler (80) connected with the condensable medium circulation section (34).

11. Apparatus (30) according to claim 10, wherein the boiler (80) comprises a heating device (90) configured to provide the heat to boiler liquid, in particular to water, so as to supply condensable medium (8), in particular water steam (8) from said boiler (80).

12. Apparatus (30) according to claims 6 to 11, comprising:
- a pressure controller (92) configured to control the pressure of steam, for example in a steam drum (94) of the boiler (80), so as to regulate an amount of said heat supplied to the endothermic cracking reaction.

13. A plant comprising a fired equipment and an apparatus (30) according to claims 6 to 12, wherein said apparatus is connected to the fired equipment to provide said enhanced fuel gas to said fired equipment, said fired equipment being configured for the combustion of the enhanced fuel gas (4).

14. Use (20) of the enhanced fuel gas (4) produced by a process according to claims 1 to 5 for a combustion.

15. Use of the apparatus (30) according to claims 6 to 12, for the production of an enhanced fuel gas (4) containing at least hydrogen gas from a fuel stream (6), in particular from an ammonia fuel stream (6).
